# EUROPÄISCHE PATENTSCHRIFT

(11) **EP 1 344 733 B1**
(45) Veröffentlichungstag und Bekanntmachung des Hinweises auf die Patenterteilung: **08.10.2008**
(21) Anmeldenummer: 03405052.6
(22) Anmeldetag: 04.02.2003
(51) Int. Cl.: B65G 63/02, B60P 1/64, B61D 47/00

(54) **Vorrichtung zum Umsetzen eines Wechselbehälters**
Transfer device for interchangeable container
Dispositif de transfert pour conteneur interchangeable

(30) Priorität: 18.02.2002 CH 2722002
(43) Veröffentlichungstag der Anmeldung: 17.09.2003
(73) Patentinhaber: SBB Cargo AG, 4052 Basel (CH)
(72) Erfinder: Becker, Thomas, 8493 Saland (CH); Dünnbier, Severin, 8406 Winterthur (CH)
(74) Vertreter: Clerc, Natalia

(56) Entgegenhaltungen:
- DE-C1- 19 501 543
- US-A- 3 576 225
- US-A- 3 871 534

## Beschreibung

### Technisches Gebiet

Die Erfindung betrifft eine Vorrichtung zum Umsetzen eines Wechselbehälters gemäss Oberbegriff des Patentanspruches 1. Sie betrifft insbesondere eine Vorrichtung zum Umsetzen eines Wechselbehälters von einem Lastkraftwagen auf einen Containertragwagen einer Eisenbahn und umgekehrt.

### Stand der Technik

Es ist seit langem bekannt, nicht-selbstrollende Wechselbehälter, insbesondere Container und dergleichen, von einer Station auf eine andere umzusetzen, indem sie mittels einer Umsetzvorrichtung quer zu ihrer Längsachse verschoben werden. Derartige Stationen können Lastkraftwagen (LKW), Containerwagen der Eisenbahn oder stationäre Lager sein.

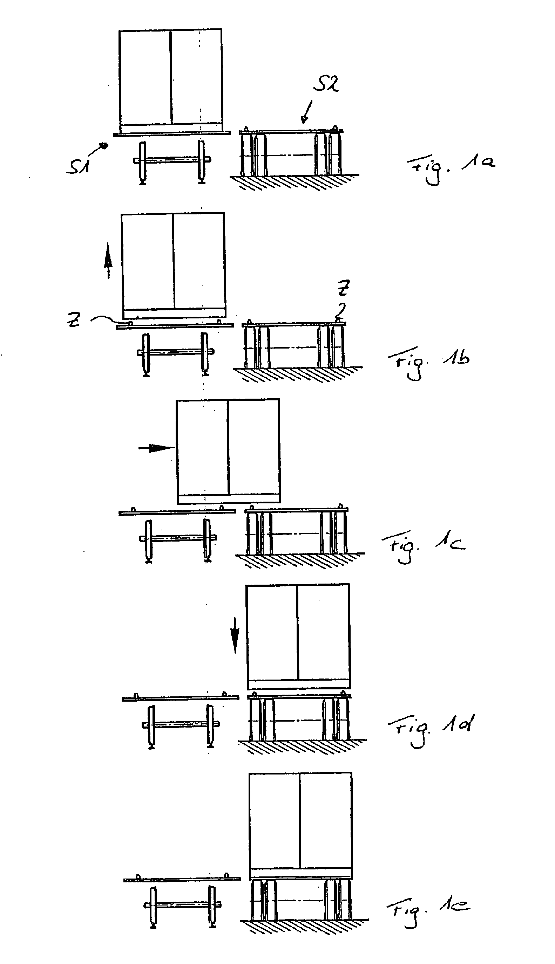

Zur Umsetzung wird die Umsetzvorrichtung, falls sie sich nicht bereits dort befindet, unter den umzusetzenden Wechselbehälter geschoben. Hierfür weist der Wechselbehälter an seiner Unterseite zwei quer zur Längsrichtung verlaufende tunnelförmige Aussparungen, sogenannte Querkanäle, auf, in welche die Umsetzvorrichtung einführbar ist. Bei der Umsetzung wird dann der Wechselbehälter, wie dies in den Figuren 1a bis 1e dargestellt ist, aus den Aufsetzzapfen Z der ersten Station S1 angehoben (Figur 1b), quer zu seiner Längsrichtung horizontal verschoben (Figur 1c) und auf die zweite Station S2 wieder auf die entsprechenden Aufsetzzapfen Z abgesenkt (Figur 1d). Die Bewegungsrichtungen sind jeweils mit einem Pfeil dargestellt. Zur umgekehrten Verschiebung lässt sich die Verschieberichtung wechseln.

Eine gattungsgemässe Vorrichtung ist aus DE 195 01 543 bekannt. Sie verfügt über ein Bodenteil zur Abstützung auf einem Untergrund, ein Mittelteil, welches gegenüber dem Bodenteil in beiden Verschieberichtungen verschiebbar ist, und über einen Tragkopf, welcher zur Aufnahme des umzusetzenden Wechselbehälters dient und welcher gegenüber dem Mittelteil angehoben werden kann. Das Mittelteil ist zudem gegenüber dem Bodenteil anhebbar und absenkbar und in horizontaler Richtung verschiebbar. Bei der Umsetzung wird jeweils abwechslungsweise das Mittelteil und das angehobene Bodenteil verschoben. Dadurch wird eine schrittweise Bewegung des Wechselbehälters ermöglicht.

Auch DE 1'251'228 offenbart eine Umsetzvorrichtung, in welcher zwei schienenförmige Tragelemente schrittweise angehoben und mittels hydraulischen Druck- und Zugpressen verschoben werden.

Ebenfalls eine schrittweise Umsetzung offenbart DE 42'08'934. Diese Vorrichtung weist Umsetzschienen auf, in welche Laufschienen verschiebbar geführt und auch in ihrer Lage arretierbar sind. Ferner sind Druckzylinder vorhanden, um den Wechselbehälter anzuheben und abzusenken. Zu Beginn des Schreitvorganges werden die Laufschienen mittels eines Antriebs horizontal verschoben, so dass auch die Druckzylinder in eine Schrägstellung gezwungen werden. Die nachfolgenden Verschiebungen erfolgen durch Aktivierung der Druckzylinder und entsprechender zeitweiser Arretierung der Laufschienen.

DE 43'14'373 zeigt eine Vorrichtung zum Umsetzen von Wechselbehältern mit einer anhebbaren und absenkbaren Schiene, welche mehrere in Verschieberichtung angeordnete Rollen aufweist. Die Rollen sind mit einem Antrieb verbunden. Der Wechselbehälter lässt sich mittels der Schiene anheben und über die angetriebenen Rollen von einer ersten Station zu einer zweiten Station kontinuierlich umsetzen. Das grosse Gewicht der Wechselbehälter belastet die Rollen jedoch ziemlich stark und stellt auch entsprechende Anforderungen an den Antrieb der Rollen.

Eine kontinuierliche Umsetzung ist einer schrittweisen zu bevorzugen, da geringere Kräfte auf die mechanischen Teile der Umsetzvorrichtung wirken und im Wechselbehälter befindliche Güter weniger durchgeschüttelt werden. Zudem weist die schrittweise Umsetzung den Nachteil auf, dass der Wechselbehälter einer grossen Querbelastung ausgesetzt wird, obwohl seine maximale Belastbarkeit in dieser Richtung im allgemeinen kleiner als 0.3 g ist.

### Darstellung der Erfindung

Es ist deshalb Aufgabe der Erfindung, eine Vorrichtung zum Umsetzen von Wechselbehältern der eingangs genannten Art zu schaffen, welche eine möglichst annähernd kontinuierliche Umsetzung ohne Zwischenstopps des Wechselbehälters ermöglicht und eine optimale Kraftverteilung aufweist.

Diese Aufgabe löst eine Vorrichtung mit den Merkmalen des Patentanspruches 1.

Die erfindungsgemässe Vorrichtung weist mehrere quer zur Umsetzungsrichtung nebeneinander angeordnete Füsse auf, welche abwechslungsweise belastbar sind und welche im unbelasteten Zustand mittels zugehöriger Vorschubzylinder in der Umsetzungsrichtung gegenüber dem Boden verschiebbar sind. Über den Füssen ist ein Tragkopf angeordnet, welcher auf dem jeweils belasteten Fuss aufliegt und welcher mittels des Vorschubzylinders dieses Fusses verschiebbar ist. Während sich der Tragkopf mit dem Wechselbehälter langsam auf dem belasteten, stillstehenden Fuss aufliegend relativ zu diesem in die Umsetzrichtung bewegt, lässt sich der unbelastete Fuss schneller in dieselbe Richtung bewegen, so dass er den belasteten Fuss überholt und beim nächsten Schritt belastet werden kann. Es ergibt sich eine Schreitbewegung der Füsse, welche bei entsprechender Abstimmung einen kontinuierlichen Vorschub des Tragkopfes und somit des Wechselbehälters erlaubt.

In einer bevorzugten Ausführungsform wird der Tragkopf mittels Fahrwerken verschoben, welche in den Füssen geführt verschiebbar sind und welche mit dem Tragkopf verbunden sind. Vorzugsweise sind die Füsse dabei als u-förmige Schienen ausgebildet, so dass sie eine Fahrbahn für die Fahrwerke bilden und diese führen.

Die wechselnde Belastung der Füsse erfolgt vorzugsweise mittels Wechslerbeinen, welche mit den Fahrwerken verbunden sind und welche mittels Fusswechslerzylinder die Fahrwerke abwechslungsweise belasten.

Die erfindungsgemässe Vorrichtung erlaubt eine gleichmässige, kontinuierliche Umsetzung, ohne dass der Tragkopf mit dem Wechselbehälter ständig gestoppt werden muss. Ferner lassen sich die im Stand der Technik verwendeten tragenden Zwischenebenen vermeiden.

Zudem lässt sich die erfindungsgemässe Vorrichtung relativ schmal ausbilden, so dass die Energiezufuhr seitlich erfolgen kann und eine Umsetzung in beiden Richtungen quer zur Längsrichtung des Wechselbehälters möglich ist.

Weitere vorteilhafte Ausführungsformen gehen aus den abhängigen Patentansprüchen hervor.

### Kurze Beschreibung der Zeichnung

Im folgenden wird der Erfindungsgegenstand anhand eines bevorzugten Ausführungsbeispieles, welches in der beiliegenden Zeichnung dargestellt ist, erläutert. Es zeigen:
- Figuren 1a bis 1e: schematische Darstellungen einer Umsetzung eines Wechselbehälters in mehreren Schritten;
- Figur 2: einen Längsschnitt durch eine erfindungsgemässe Umsetzvorrichtung im abgesenkten Zustand;
- Figur 3: einen Längsschnitt durch einen Teil der erfindungsgemässen Umsetzvorrichtung im angehobenen Zustand;
- Figur 4: einen Querschnitt durch die Umsetzvorrichtung gemäss Figur 3;
- Figur 5: eine perspektivische Darstellung eines Beinwechslers mit Fahrwerken und angehobenen Hubstangen;
- Figur 6: der Beinwechsler mit Fahrwerken gemäss Figur 5 mit gesenkten Hubstangen;
- Figur 7: eine Ansicht des Beinwechslers mit Fahrwerken gemäss Figur 5 bei belastetem äusseren Fahrwerk;
- Figur 8: der Beinwechsler gemäss Figur 7 bei belastetem inneren Fahrwerk;
- Figur 9a: eine graphische Darstellung des zeitlichen Bewegungsablaufes der Vorschubzylinder und
- Figur 9b: eine graphische Darstellung des zeitlichen Bewegungsablaufes des Fusswechslerzylinders.

### Wege zur Ausführung der Erfindung

Im folgenden werden Richtungsangaben erwähnt, welche sich auf eine normale Umsetzung von Wechselbehältern beziehen. Die Angaben "oben" und "unten" sind durch die normale Lage des Wechselbehälters auf einer Station bestimmt. Die Begriffe "vorne" und "hinten" sowie "rechts" und "links" werden durch die Lage des Wechselbehälters auf einem LKW definiert. Da die Umsetzung des Wechselbehälters quer zu seiner Längsrichtung erfolgt, bewegt sich somit die Umsetzvorrichtung von rechts nach links beziehungsweise von links nach rechts.

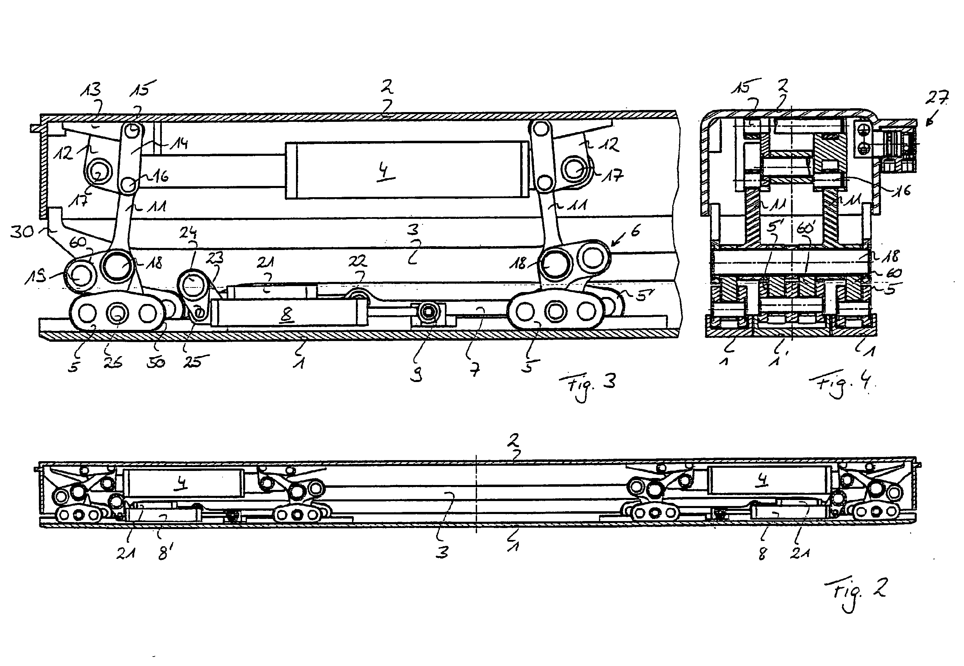

Die erfindungsgemässe Vorrichtung zur Umsetzung eines hier nicht dargestellten Wechselbehälters umfasst im wesentlichen, wie in Figur 2 dargestellt ist, eine Bodeneinheit mit mehreren Füssen 1, 1' zur Auflage auf einem Untergrund, einen Tragkopf 2 zum Tragen des Wechselbehälters sowie Mittel zur Anhebung und Absenkung des Tragkopfes 2 und Mittel für eine Bewegung des Tragkopfes 2 in Umsetzungsrichtung des Wechselbehälters. Dabei sind diese zwei Arten von Mitteln sowohl auf der rechten wie auf der linken Seite der Vorrichtung vorhanden, wobei sie spiegelsymmetrisch angeordnet sind.

Zur Umsetzung werden im allgemeinen zwei oder mehr derartiger Vorrichtungen eingesetzt, welche in Längsrichtung des Wechselbehälters beabstandet voneinander unter diesem angeordnet und synchron zueinander bewegt werden. Dabei greift jede dieser Vorrichtung in einen Querkanal oder ein gleichwirkendes Element des umzusetzenden Wechselbehälters ein.

Die Umsetzvorrichtung ist im allgemeinen bereits auf einer Station angeordnet, von welcher oder zu welcher ein Wechselbehälter umgesetzt werden soll. Sie lässt sich jedoch auch auf einer Zwischenstation anordnen, welche zwischen zwei Umsetzstationen gebracht werden kann. Soll der Wechselbehälter von einem LKW auf einen Containertragwagen einer Eisenbahn oder umgekehrt umgesetzt werden, so verfügt vorzugsweise der LKW über die erfindungsgemässe Vorrichtung.

Um Wechselbehälter in ihrer Lage auf den Stationen zu fixieren, sind sie üblicherweise mit Eckbeschlägen versehen, welche mit Aufsetzzapfen Z der Stationen in Wirkverbindung gebracht werden können (Figur 1b). Zur Umsetzung wird der LKW in geringem Abstand parallel zum Containertragwagen herangefahren. Der LKW wird dabei so ausgerichtet, dass die Twist-Lock-Beschläge des LKW mit den Aufsetzzapfen des Containertragwagens fluchten. Die erfindungsgemässe Vorrichtung wird im abgesenkten Zustand, wie sie in Figur 2 dargestellt ist, unter den Querkanal des Wechselbehälters gefahren und anschliessend in den in Figur 3 dargestellten Zustand angehoben. Damit wird der Wechselbehälter aus den Aufsetzzapfen Z gehoben. Der angehobene Zustand wird nun während der Umsetzung beibehalten. Nach der Umsetzung wird die Vorrichtung wieder abgesenkt und der Wechselbehälter wird auf die Aufsetzzapfen Z der anderen Station aufgesetzt.

Im folgenden wird anhand der Figuren 3 bis 8 die erfindungsgemässe Vorrichtung detailliert beschrieben, wobei zuerst auf die Mittel für die Querbewegung näher eingegangen wird:

Die Bodeneinheit besteht aus mehreren Füssen 1, 1'. Im hier dargestellten Beispiel sind es drei Füsse, zwei äussere Füsse 1 und ein innerer Fuss 1'. Eine andere Anzahl Füsse 1, 1' ist auch möglich, solange eine Wahrung des Gleichgewichts gewährleistet ist. Die Füsse 1, 1' sind vorzugsweise als Schienen mit einem mindestens teilweise u-förmigen Querschnitt ausgebildet. Vorzugsweise sind sie aus Metall gefertigt.

In den u-förmigen inneren und äusseren Füssen 1, 1' sind innere respektive äussere Fahrwerke 5, 5' angeordnet, welche in diesen geführt verschiebbar sind. Vorzugsweise sind pro Fuss 1, 1' auf der rechten und linken Seite mindestens je zwei Fahrwerke 5, 5' hintereinander angeordnet. Die Fahrwerke 5,5' weisen Stützrollen 50 auf, welche in den Füssen 1, 1' aufliegen. In senkrechter Richtung zur Umsetzungsrichtung nebeneinander angeordnete Fahrwerke 5,5' sind über einen Beinwechsler 6 miteinander verbunden. Hier sind zwei innere Fahrwerke 5' von zwei äusseren Fahrwerken 5 flankiert. Dies ist in den Figuren 4 bis 6 am besten sichtbar.

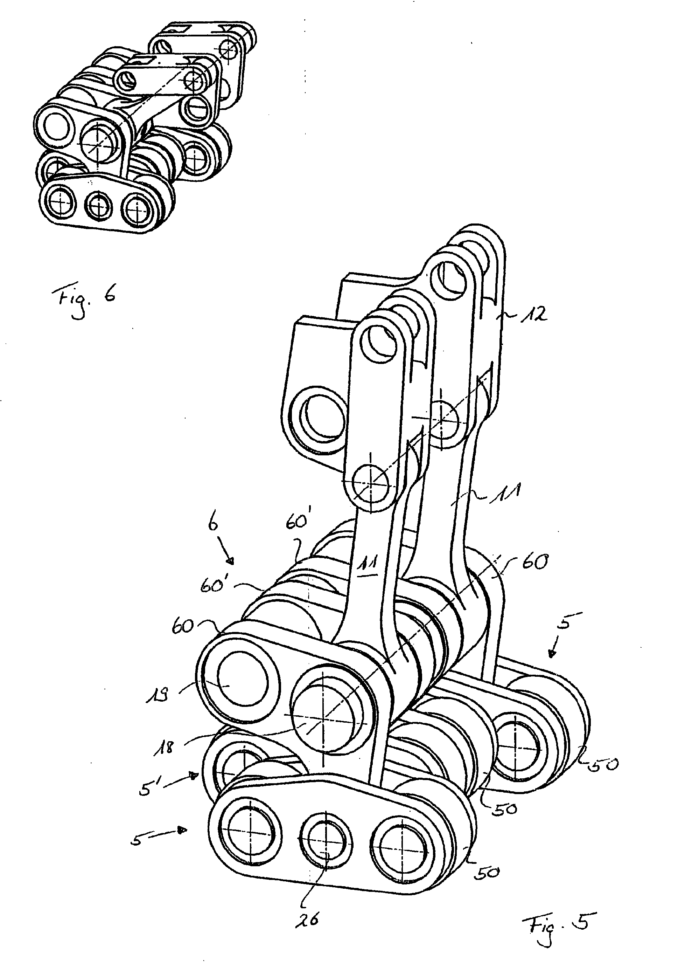

Der Beinwechsler 6 besteht aus mehreren Wechslerbeinen 60, 60' und einem Wechslerrohr 19, welches die Wechslerbeine 60, 60' fest miteinander verbindet. Die Wechslerbeine lassen sich in innere und äussere Wechslerbeine 60, 60' unterteilen. Sie sind winkelförmig ausgebildet und weisen jeweils zwei Schenkel auf, die wie Pendelstützen wirken, welche um eine Hüftwelle 18 drehen. Zur Synchronisation der Drehbewegungen der inneren und äusseren Schenkel sind diese mit dem Wechselrohr 19 verbunden. Auf der Hüftwelle 18 sind zwischen den Wechslerbeinen 60,60' Hubstangen 11 schwenkbar angeordnet, welche über Hubkoppeln 12 zur Verbindung mit dem Tragkopf 2 dienen. In der Figur 5 sind die Hubstangen und somit der nicht dargestellte Tragkopf 2 angehoben, in Figur 6 sind sie abgesenkt. Der andere Schenkel des Winkels ist an seinem freien Ende jeweils von einer Fahrwerkswelle 26 durchsetzt, welche eine schwenkbare Verbindung mit einem der Fahrwerke 5,5' bildet.

Wie in den Figuren 2 bis 4 sichtbar ist, sind den Füssen 1, 1' mindestens ein, hier zwei Vorschubzylinder 8, 8' zugeordnet. Es handelt sich dabei vorzugsweise um hydraulische doppelwirkende Zylinder, welche mindestens annähernd horizontal ausgerichtet sind. Eines der Vorschubzylinderpaare 8 ist an einem Ende über eine Vorschubzylinderwelle 9 an den äusseren Füssen 1 befestigt. Das andere Paar ist über eine zweite Welle am inneren Fuss 1' befestigt. Am anderen Ende sind sie über einen Schreiterbock 25 und ein Hüftrohr 24 fest an einem als Lagerfixierung dienenden Hüftelement 3 befestigt.

Der linke und der rechte Beinwechsler 6 sind über eine Wechslerstange 7 miteinander verbunden. Die Wechslerstange 7 ist über eine Fusswechslerzylinderwelle 22 schwenkbar an einen Fusswechslerzylinder 21 gekoppelt. An seinem anderen Ende ist der Fusswechslerzylinder 21 mit seinem anderen Ende über einen Wechslerbock 23 und das Hüftrohr 24 am Hüftelement 3 angebracht. Er ist, wie die anderen Zylinder, mindestens annähernd in horizontaler Richtung angeordnet und er ist ein doppelwirkender hydraulischer Zylinder.

Das Hüftelement 3 erstreckt sich vom rechten zum linken Beinwechsler 6 eines Paares, wobei es über die Hüftwellen 18 mit dem entsprechenden Beinwechsler 6 verbunden ist und als Distanzelement dient. Das Hüftelement 3 endet an seinem rechten bzw. linken Ende in einer Führungsnase 30, welche eine Längsführung für den Tragkopf 2 gewährleistet.

Bevor auf die Wirkungsweise dieser Elemente eingegangen wird, sollen im folgenden anhand der Figuren 2 bis 4 noch die Mittel zur Anhebung und Absenkung des Tragkopfes 2 und deren Wirkungsweise beschrieben werden:
Es gibt, wie bereits beschrieben, zwei rechte und zwei linke Hubstangen 11. Die zwei rechten beziehungsweise linken Hubstangen 11 sind jeweils an ihren oberen Enden über eine Kniewelle 16 schwenkbar miteinander verbunden. Ferner sind sie an einer Hubkoppel 12 befestigt, welche über einen Hubkoppelbock 13 mit dem oberen Tragkopf 2 verbunden ist. Die Hubkoppel 12 weist eine Hubkoppelverstärkung 14 auf, welche den Bereich zwischen einer oberen Hubwelle 15 und der Kniewelle 16 verstärkt.

Der Tragkopf 2 ist ebenfalls vorzugsweise aus Metall gefertigt und weist einen u-förmigen Querschnitt auf. Der Tragkopf 2 erstreckt sich vorzugsweise über die gesamte Breite der Vorrichtung und schliesst im abgesenkten Zustand mit seinen seitlichen Schürzen die Vorrichtung weitgehend ab.

Zur Anhebung und Absenkung des Tragkopfs 2 sind mindestens einer, hier zwei Hubzylinder 4 vorhanden. Auch dieser ist ein hydraulischer, doppelwirkender Zylinder. Er ist an seinem vorderen und hinteren Ende jeweils über eine Hubzylinderwelle 17 mit der entsprechenden Hubkoppel 12 verbunden. Die Energiezufuhr-Anschlüsse 27 für die Zylinder sind, wie in Figur 4 dargestellt ist, vorzugsweise seitlich angeordnet.

Wie oben bereits erwähnt, wird zum Ausheben des Wechselbehälters der Tragkopf 2 angehoben. Hierfür drückt der Hubzylinder 4 den Tragkopf 2 über die beiden Hubkoppeln 12 und die Hubstangen 11 nach oben. Die Hubstangen 11 stützen sich über die Kniewelle 16, die Wechslerbeine 60, 60', die Fahrwerke 5,5' sowie die Stützrollen 50 auf den Füssen 1, 1' ab. Das Hüftelement 3 übernimmt dabei und auch während den anderen Verfahrensschritten keinerlei tragende Funktion.

Für die Querverschiebung des Wechselbehälters werden nun die inneren und äusseren Füsse 1, 1' abwechselnd belastet. Bei Belastung erfolgt dabei der Kraftfluss in vertikaler Richtung von der Hubstange 11 über die Hüftwelle 18 auf die Fahrwerkswelle 26. Ist der innere Fuss 1' belastet, so bewegen sich die zugehörigen Fahrwerke 5' und somit der Tragkopf 2 relativ zu diesem Fuss in der Umsetzungsrichtung, wobei die Fahrwerke 5' über das Hüftelement 3 von dem zum inneren Fuss 1' gehörenden Vorschubzylinder 8' angetrieben werden. Dabei rollen oder gleiten die Stützrollen 50 der inneren Fahrwerke 5' über die innere Fläche des inneren Fusses 1', welche als Roll- und Gleitbahn dient. Gleichzeitig werden die unbelasteten äusseren Füsse 1 durch ihre zugehörigen Vorschubzylinder 8 relativ zum Untergrund ebenfalls in der Umsetzungsrichtung weitergeschoben.

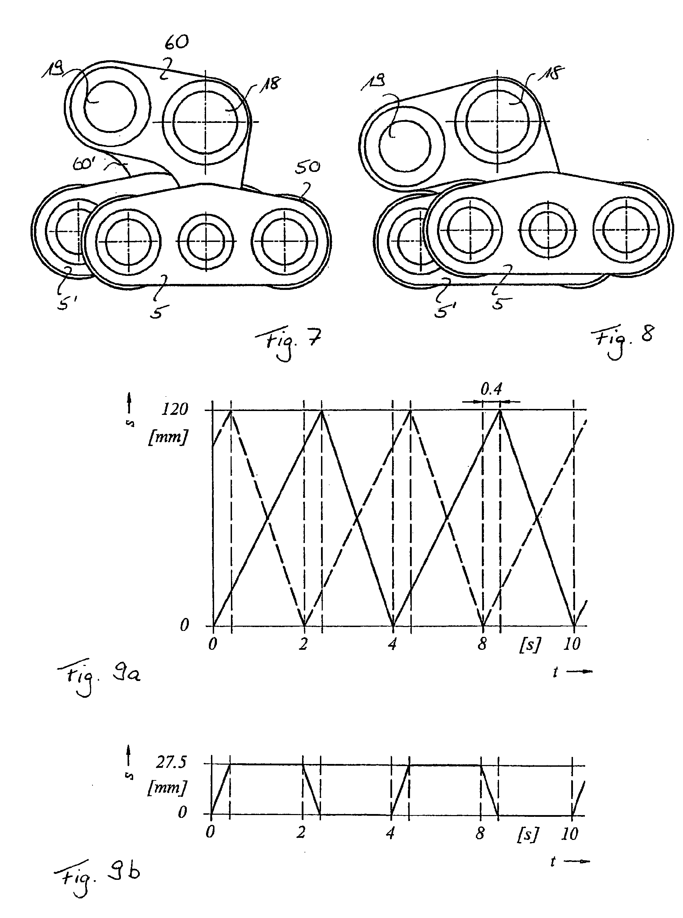

Nach einer gewissen Zeit beziehungsweise zurückgelegter Strecke werden der innere Fuss 1' ent- und die äusseren Füsse belastet, so dass sich nun die oben genannten Bewegungen in umgekehrter Besetzung wiederholen können. Dieser Wechsel erfolgt mittels des Fusswechslerzylinders 21. Bei Betätigung des Fusswechslerzylinders 21 werden die Wechslerbeine 60, 60' mittels der Wechslerstange 7 um die Hüftwelle 18 gekippt, was zu einer Anhebung beziehungsweise Absenkung der Fahrwerke 5, 5' führt. Durch diese Drehbewegung wird die Hubstange 11 erst leicht abgesenkt und anschliessend angehoben. Die Figuren 7 und 8 stellen eine derartige Beinwechslerbewegung dar. In der Figur 7 liegt die Vorrichtung auf den äusseren Fahrwerken 5 auf, in der Figur 8 auf den inneren Fahrwerken 5'.

Die Figuren 9a und 9b verdeutlichen die Bewegungsform. In der Figur 9a ist der Hub der zwei Vorschubzylinder 8, 8' als Funktion der Zeit dargestellt, wobei der Vorschubzylinder 8' für den inneren Fuss 1' gestrichelt und derjenige für die äusseren Füsse 1 mit durchgezogener Linie dargestellt ist. Der maximale Hub beträgt in diesem Beispiel jeweils ungefähr 120 mm. Die Zeit zwischen zwei maximalen Hüben desselben Fahrwerks beträgt hier circa 4 Sekunden. Die zwei Vorschubzylinder 8, 8' sind antizyklisch mit einer zeitlichen Versetzung, hier von 0.4 s betrieben. Dabei weist der positive Hub, welcher einer Verschiebung des Fahrwerkes im belasteten Fuss entspricht, eine kleinere absolute Steigung auf als der negative Hub, welcher der Verschiebung des unbelasteten Fusses entspricht. Das heisst, der unbelastete Fuss wird schneller verschoben als das Fahrwerk. In Figur 9b ist der Hub des Fusswechslerzylinders 21 ebenfalls als Funktion der Zeit dargestellt. Die Änderung im Hub entspricht jeweils einer Änderung der Belastung der Füsse 1, 1' Der Wechsel des Hubes der Vorschubzylinder 8, 8' muss in derjenigen Zeitspanne, hier 0,4 s, erfolgen, in welcher der Hub der Vorschubzylinder gemäss Fig. 9a dieselbe Bewegungsrichtung aufweisen.

Der gesamte Ablauf wird durch eine Steuerung synchronisiert und kann in beiden Richtungen ablaufen.

Die erfindungsgemässe Vorrichtung ermöglicht somit eine fast annähernd kontinuierliche Umsetzung eines Wechselbehälters auf fast annähernd gleichbleibender Höhe.

### Bezugszeichenliste

- 1: äusserer Fuss
- 1': innerer Fuss
- 2: Tragkopf
- 3: Hüftelement
- 30: Führungsnase
- 4: Hubzylinder
- 5: äusseres Fahrwerk
- 5': inneres Fahrwerk
- 50: Stützrolle
- 6: Beinwechsler
- 60: äusseres Wechslerbein
- 60': inneres Wechslerbein
- 7: Wechslerstange
- 8, 8': Vorschubzylinder
- 9: Vorschubzylinderwelle
- 11: Hubstange
- 12: Hubkoppel
- 13: Hublagerbock
- 14: Hubkoppelverstärkung
- 15: Hubwelle
- 16: Kniewelle
- 17: Hubzylinderwelle
- 18: Hüftwelle
- 19: Wechslerrohr
- 21: Fusswechslerzylinder
- 22: Fusswechslerzylinderwelle
- 23: Wechslerbock
- 24: Hüftrohr
- 25: Schreiterbock
- 26: Fahrwerkswelle
- 27: Energiezufuhr-Anschlüsse

## Patentansprüche

1. Vorrichtung zum Umsetzen eines Wechselbehälters zwischen zwei Stationen, wobei die Umsetzung quer zu einer Längsachse des Wechselbehälters erfolgt, mit einer Bodeneinheit und einem gegenüber der Bodeneinheit anhebbaren und relativ zu dieser in Richtung der Umsetzung verschiebbaren Tragkopf (2), wobei Vorschubzylinder (8, 8`) für einen Vorschub der Bodeneinheit in Umsetzungsrichtung vorhanden sind,
**dadurch gekennzeichnet, dass**
die Bodeneinheit aus mehreren Füssen (1,1') besteht, wobei in einer zur Umsetzungsrichtung senkrechten Ebene mindestens zwei äussere Füsse (1) und mindestens ein innerer Fuss (1') angeordnet sind, und
dass die äusseren Füsse (1) abwechselnd mit dem mindestens einen inneren Fuss (1') belastbar sind, so dass der Tragkopf (2) abwechslungsweise auf den äusseren Füssen (1) und dem mindestens einen inneren Fuss (1') aufliegt und von dem, dem belasteten Fuss (1, 1) zugehörigen, Vorschubzylinder (8, 8`) verschiebbar ist.

2. Vorrichtung nach Anspruch 1, **dadurch gekennzeichnet, dass** in jedem Fuss (1, 1') mindestens ein Fahrwerk (5, 5`) relativ zum zugehörigen Fuss (1, 1') verschiebbar angeordnet ist, wobei das mindestens eine Fahrwerk (5, 5') mit dem Tragkopf (2) verbunden ist und wobei das mindestens eine Fahrwerk (5') des mindestens einen inneren Fusses (1') und das mindestens eine Fahrwerke (5) der äusseren Füsse (1) abwechslungsweise belastbar sind.

3. Vorrichtung nach Anspruch 2, **dadurch gekennzeichnet, dass** nebeneinander angeordnete äussere und innere Fahrwerke (5, 5") mit einem gemeinsamen Beinwechsler (6) schwenkbar verbunden sind, wobei am Beinwechsler (6) mindestens eine Hubstange (11) zur Verbindung mit dem Tragkopf (2) schwenkbar angebracht ist.

4. Vorrichtung nach Anspruch 3, **dadurch gekennzeichnet, dass** der Beinwechsler (6) aus inneren und äusseren winkelförmigen Wechslerbeinen (60, 60') besteht, welche über ein gemeinsames Wechslerrohr (19) fest miteinander verbunden sind, welche über Fahrwerkswellen (26) mit zugehörigen Fahrwerken (5, 5') schwenkbar verbunden sind und welche über eine gemeinsame Hüftwelle (18) schwenkbar mit der mindestens einen Hubstange (11) verbunden sind.

5. Vorrichtung nach einem der Anspruch 2 bis 4, **dadurch gekennzeichnet, dass** die äusseren und inneren Füsse (1, 1') Schienen mit mindestens teilweise u-förmigem Querschnitt sind, in welchen die Fahrwerke (5, 5') geführt verschiebbar sind.

6. Vorrichtung nach einem der Ansprüche 2 bis 5, **dadurch gekennzeichnet, dass** die Fahrwerke (5, 5') Stützrollen (50) aufweisen, welche in den Füssen (1, 1') aufliegen.

7. Vorrichtung nach einem der Ansprüche 3 bis 6, **dadurch gekennzeichnet, dass** in Umsetzungsrichtung mindestens ein Paar rechter und linker Beinwechsler (6) vorhanden sind, wobei die Beinwechsler (6) über mindestens ein als Distanzelement dienendes Hüftelement (3) miteinander verbunden sind.

8. Vorrichtung nach einem der vorhergehenden Ansprüche, **dadurch gekennzeichnet, dass** für den Wechsel von den inneren auf die äusseren Füsse (1, 1') ein mindestens annähernd horizontal angeordneter Fusswechslerzylinder (21) vorhanden ist.

9. Vorrichtung nach den Ansprüchen 3 und 8, **dadurch gekennzeichnet, dass** der Fusswechslerzylinder (21) über eine Wechslerstange (7) mit dem mindestens einen Wechslerbein (6) und über ein Hüftrohr (24) mit dem Hüftelement (3) verbunden ist.

10. Vorrichtung nach einem der Ansprüche 2 bis 9, **dadurch gekennzeichnet, dass** mindestens ein erster Vorschubzylinder (8) mit den äusseren Füssen (1) und über das Hüftelement (3) mit den äusseren Fahrwerken (5) verbunden ist und dass ein zweiter Vorschubzylinder (8') mit dem mindestens einen inneren Fuss (1') und über das Hüftelement (3) mit dem mindestens einen inneren Fahrwerk (5') verbunden ist.

11. Vorrichtung nach einem der vorhergehenden Ansprüche, **dadurch gekennzeichnet, dass** zur Anhebung und Absenkung des Tragkopfes (2) mindestens ein mindestens annähernd horizontal angeordneter Hubzylinder (4) vorhanden ist, welcher über Hubkoppeln (12) mit dem Tragkopf (2) verbunden ist, und dass Hubstangen (11) vorhanden sind, welche die Füsse (1, 1') mit den Hubkoppeln (12) verbinden.

## Claims

1. Apparatus for transferring an interchangeable container between two stations, transfer taking place transversely to a longitudinal axis of the interchangeable container, having a base unit and a carrying head (2) which can be raised in relation to the base unit and displaced relative to the same in the direction of transfer, advancement cylinders (8, 8') being provided for advancing the base unit in the transfer direction,
**characterized in that**
the base unit comprises a plurality of feet (1, 1'), at least two outer feet (1) and at least one inner foot (1') being arranged in a plane perpendicular to the transfer direction, and
**in that** the outer feet (1) can be subjected to loading alternately in relation to the at least one inner foot (1'), in which case the carrying head (2) rests alternately on the outer feet (1) and the at least one inner foot (1') and can be displaced by the advancement cylinder (8, 8') associated with the foot (1, 1') which is subjected to loading.

2. Apparatus according to Claim 1, **characterized in that** at least one running-gear mechanism (5, 5') is arranged in each foot (1, 1') such that it can be displaced relative to the associated foot (1, 1'), the at least one running-gear mechanism (5, 5') being connected to the carrying head (2), and it being possible for the at least one running-gear mechanism (5') of the at least one inner foot (1') and the at least one running-gear mechanism (5) of the outer feet (1) to be subjected to loading alternately.

3. Apparatus according to Claim 2, **characterized in that** outer and inner running-gear mechanisms (5, 5') arranged one beside the other are connected in a pivotable manner to a common leg changer (6), at least one lifting rod (11), for connection to the carrying head (2), being fitted in a pivotable manner on the leg changer (6).

4. Apparatus according to Claim 3, **characterized in that** the leg changer (6) comprises inner and outer angled changer legs (60, 60') which are fixed to one another via a common changer tube (19), which are connected in a pivotable manner to associated running-gear mechanisms (5, 5') via running-gear mechanism shafts (26), and which are connected in a pivotable manner to the at least one lifting rod (11) via a common hip shaft (18).

5. Apparatus according to one of Claims 2 to 4, **characterized in that** the outer and inner feet (1, 1') are rails with an at least partially u-shaped cross section, in which the running-gear mechanisms (5, 5') can be displaced with guidance.

6. Apparatus according to one of Claims 2 to 5, **characterized in that** the running-gear mechanisms (5, 5') have supporting rollers (50) which rest in the feet (1, 1').

7. Apparatus according to one of Claims 3 to 6, **characterized in that**, as seen in the transfer direction, at least one pair of right-hand and left-hand leg changers (6) are provided, the leg changers (6) being connected to one another via at least one hip element (3) serving as a spacer element.

8. Apparatus according to one of the preceding claims, **characterized in that** an at least more or less horizontally arranged foot-changer cylinder (21) is provided for the changeover from the inner to the outer feet (1, 1').

9. Apparatus according to Claims 3 and 8, **characterized in that** the foot-changer cylinder (21) is connected to the at least one changer leg (6) via a changer rod (7) and to the hip element (3) via a hip tube (24).

10. Apparatus according to one of Claims 2 to 9, **characterized in that** at least one first advancement cylinder (8) is connected to the outer feet (1) and, via the hip element (3), to the outer running-gear mechanisms (5), and **in that** a second advancement cylinder (8') is connected to the at least one inner foot (1') and, via the hip element (3), to the at least one inner running-gear mechanism (5').

11. Apparatus according to one of the preceding claims, **characterized in that** provided for the purpose of raising and lowering the carrying head (2) is at least one at least more or less horizontally arranged lifting cylinder (4), which is connected to the carrying head (2) via lifting connecting rods (12), and **in that** lifting rods (11) are provided in order to connect the feet (1, 1') to the lifting connecting rods (12).

## Revendications

1. Dispositif de transfert d'un conteneur interchangeable entre deux postes, le transfert s'effectuant transversalement à un axe longitudinal du conteneur interchangeable, avec une unité de fond et une tête de support (2) pouvant être soulevée par rapport à l'unité de fond et pouvant être déplacée par rapport à celle-ci dans la direction du transfert, des cylindres d'avance (8, 8') étant prévus pour assurer l'avance de l'unité de fond dans la direction du transfert,
**caractérisé en ce que**
l'unité de fond se compose de plusieurs pieds (1, 1'), au moins deux pieds extérieurs (1) et au moins un pied intérieur (1') étant disposés dans un plan perpendiculaire à la direction de transfert, et
**en ce que** les pieds extérieurs (1) peuvent être sollicités en alternance avec l'au moins un pied intérieur (1'), de telle sorte que la tête de support (2) repose en alternance sur les pieds extérieurs (1) et sur l'au moins un pied intérieur (1'), et puisse être déplacée par le cylindre d'avance (8, 8') associé au pied (1, 1') sollicité.

2. Dispositif selon la revendication 1, **caractérisé en ce que** dans chaque pied (1, 1') est disposé au moins un châssis (5, 5') pouvant être déplacé par rapport au pied associé (1, 1'), l'au moins un châssis (5, 5') étant connecté à la tête de support (2) et l'au moins un châssis (5') de l'au moins un pied intérieur (1') et l'au moins un châssis (5) des pieds extérieurs (1) pouvant être sollicités en alternance.

3. Dispositif selon la revendication 2, **caractérisé en ce que** des châssis (5, 5') extérieurs et intérieurs disposés les uns à côté des autres sont connectés de manière pivotante à un dispositif de changement à bras commun (6), au moins une tige de levage (11) pour la connexion à la tête de support (2) étant montée de manière pivotante sur le dispositif de changement à bras (6).

4. Dispositif selon la revendication 3, **caractérisé en ce que** le dispositif de changement à bras (6) se compose de bras de changement (60, 60') coudés internes et externes, qui sont connectés fixement l'un à l'autre par le biais d'un tube de changement commun (19), qui sont connectés de manière pivotante par le biais d'arbres de châssis (26) à des châssis associés (5, 5') et qui sont connectés par le biais d'un arbre d'articulation commun (18) de manière pivotante à l'au moins une tige de levage (11).

5. Dispositif selon l'une quelconque des revendications 2 à 4, **caractérisé en ce que** les pieds extérieurs et intérieurs (1, 1') sont des rails ayant une section transversale au moins en partie en forme de U, dans lesquels les châssis (5, 5') peuvent être guidés par coulissement.

6. Dispositif selon l'une quelconque des revendications 2 à 5, **caractérisé en ce que** les châssis (5, 5') présentent des galets de support (50) qui reposent dans les pieds (1, 1').

7. Dispositif selon l'une quelconque des revendications 3 à 6, **caractérisé en ce que**, dans la direction de transfert, au moins une paire de dispositifs de changement à bras droit et gauche (6) est prévue, les dispositifs de changement à bras (6) étant connectés l'un à l'autre par le biais d'au moins un élément d'articulation (3) servant d'élément d'espacement.

8. Dispositif selon l'une quelconque des revendications précédentes, **caractérisé en ce que** pour le changement des pieds intérieurs aux pieds extérieurs (1, 1'), on prévoit un cylindre de changement de pieds (21) disposé au moins approximativement horizontalement.

9. Dispositif selon les revendications 3 et 8, **caractérisé en ce que** le cylindre de changement de pied (21) est connecté à l'au moins un bras de changement (6) par le biais d'une barre de changement (7) et par le biais d'un tube d'articulation (24) à l'élément d'articulation (3).

10. Dispositif selon l'une quelconque des revendications 2 à 9, **caractérisé en ce qu'**au moins un premier cylindre d'avance (8) est connecté aux pieds extérieurs (1) et par le biais de l'élément d'articulation (3) aux châssis extérieurs (5), et **en ce qu'**un deuxième cylindre d'avance (8') est connecté à l'au moins un pied intérieur (1') et par le biais de l'élément d'articulation (3) à l'au moins un châssis intérieur (5').

11. Dispositif selon l'une quelconque des revendications précédentes, **caractérisé en ce que** pour soulever et abaisser la tête de support (2), au moins un cylindre de levage (4) disposé au moins approximativement horizontalement est prévu, lequel est connecté par le biais de bielles de levage (12) à la tête de support (2), et **en ce que** des barres de levage (11) sont prévues, lesquelles relient les pieds (1, 1') aux bielles de levage (12).
